# EUROPÄISCHE PATENTSCHRIFT

(11) **EP 2 119 619 B1**
(45) Veröffentlichungstag und Bekanntmachung des Hinweises auf die Patenterteilung: **10.10.2012**
(21) Anmeldenummer: 09002563.6
(22) Anmeldetag: 24.02.2009
(51) Int. Cl.: B62D 35/00, B60J 7/05

(54) **Kraftfahrzeug mit ausfahrbarer Luftleiteinrichtung**
Motor vehicle with deployable spoiler
Véhicule automobile avec dispositif aérodynamique retractable

(30) Priorität: 16.05.2008 DE 102008024891
(43) Veröffentlichungstag der Anmeldung: 18.11.2009
(73) Patentinhaber: Dr. Ing. h.c. F. Porsche AG, 70435 Stuttgart (DE)
(72) Erfinder: Molnar, Bela, 71139 Ehningen (DE); Adams, Stefan, 75181 Pforzheim-Hohenwart (DE); Eck, Helmut, 71277 Rutesheim (DE)

(56) Entgegenhaltungen:
- EP-A1- 0 882 642
- EP-A1- 0 885 799
- BE-A4- 1 004 749
- DE-A1- 4 305 090
- DE-A1- 10 062 156
- DE-A1-102008 018 577

## Beschreibung

Die vorliegende Erfindung betrifft ein Kraftfahrzeug mit zumindest einer, mittels einer Antriebseinrichtung, ausfahrbaren Luftleiteinrichtung gemäß dem Oberbegriff des Anspruchs 1.

Aus der DE 103 09 369 A1 ist ein gattungsgemäßes Kraftfahrzeug mit zumindest einer, mittels eines Antriebs ausfahrbaren Luftleiteinrichtung mit einer Luftleitfläche bekannt. Die Luftleitfläche ist über eine bewegliche, mehrere an der Fahrzeugkarosserie drehfest gelagerte Schwenklenker umfassende, Aufstellmechanik gehalten und derart ausgebildet, dass in maximal ausgefahrener Stellung der Luftleitfläche zumindest ein Schwenklenker der Aufstellmechanik mittels zumindest eines Anschlages abgestützt wird. Hierdurch soll es möglich sein, kleinere und schwächere Antriebe zu verwenden, da die Abstützung der Luftleitfläche auch bei höheren Geschwindigkeiten ausschließlich über eine selbsthemmende Hebelkinematik gewährleistet wird und nicht mehr von der Antriebseinrichtung aufgebracht werden muss.

Aus der DE 10 2004 043 544 B4 ist ebenfalls eine Luftleiteinrichtung mit einem luftleitenden Spoilerblatt sowie einer Verstelleinrichtung bekannt, welche das Spoilerblatt bedarfsweise zwischen einer Ruhestellung und einer Betriebsstellung bewegt. In der Betriebsstellung befindet sich das Spoilerblatt außerhalb der Karosseriestruktur. Um die Luftströmung möglichst effektiv zur Erzeugung eines Abtriebs für das Kraftfahrzeug nutzen zu können, weist das Spoilerblatt einen Unterströmschutz auf, der eine Luftströmung unterhalb des Spoilerblattes verhindert. Gleichzeitig ist eine, einen integralen Bestandteil des Spoilerblattes bildende Wasserleitvorrichtung vorgesehen, die ein Eindringen von Wasser in eine Ablagemulde der Luftleiteinrichtung nach Möglichkeit verhindern soll.

Luftleiteinrichtungen an Kraftfahrzeugen, insbesondere an Sportwagen, sind hinlänglich bekannt und dienen üblicherweise der Erzeugung von Abtrieb während des Fahrens, um dadurch die Straßenhaftung des Kraftfahrzeuges verbessern zu können. Ebenfalls bekannt sind dabei auch Luftleiteinrichtungen mit Luftleitelementen, welche geschwindigkeitsabhängig ausfahren und dadurch bei höheren Geschwindigkeiten einen steileren Anstellwinkel aufweisen und mehr Abtrieb erzeugen als bei geringeren Geschwindigkeiten. Dabei ist bekannt, dass die Aerodynamik von Kraftfahrzeugen nicht nur von deren Außenkontur abhängt, sondern auch von weiteren Merkmalen, wie beispielsweise geöffneten Seitenscheiben, Rückspiegeln, etc..

Die vorliegende Erfindung beschäftigt sich daher mit dem Problem, für ein gattungsgemäßes Kraftfahrzeug eine verbesserte oder zumindest eine andere Ausführungsform anzugeben, bei welcher ein durch eine Luftleiteinrichtung erzeugter Abtrieb individuell beeinflussbar ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, die Betätigung einer Luftleiteinrichtung, wobei die Luftleiteinrichtung als Heckspoiler ausgebildet ist, in Abhängigkeit von einem Öffnungsgrad eines Schiebe-/Hebedaches zu bewirken, so dass die Stellung der Luftleiteinrichtung stets an die individuellen aerodynamischen Verhältnisse - hervorgerufen durch unterschiedliche Öffnungsgrade des Schiebe-/Hebedaches - angepasst ist. Das Kraftfahrzeug weist dabei - die oben beschriebene - ausfahrbare Luftleiteinrichtung auf, welche zwischen einer maximal ausgefahrenen und einer vollständig eingefahrenen Stellung in zumindest eine weitere Zwischenstellung verstellbar ist. Eine erfindungsgemäß vorgesehene Steuerungseinrichtung erfasst dabei eine Stellung des Schiebe-/Hebedaches und damit eine mögliche Beeinflussung der aerodynamischen Verhältnisse durch das Schiebe-/Hebedach und betätigt die Luftleiteinrichtung in Abhängigkeit der Stellung des Schiebe-/Hebedaches, wobei die Luftleiteinrichtung weiter ausgefahren wird, wenn das Schiebe-/Hebedach geöffnet ist, als dies der Fall ist, wenn das Schiebe-/Hebedach geschlossen ist. Ein geöffnetes und insbesondere ein lediglich angestelltes Schiebe-/Hebedach kann nämlich zu einem Abriss einer Luftströmung führen, so dass die in Fahrtrichtung dahinter angeordnete Luftleiteinrichtung nicht mehr genügend Abtrieb erzeugen kann. Aus diesem Grund kann - beispielsweise hinterlegt in einem Kennfeld - die Steuerungseinrichtung festlegen, dass die Luftleiteinrichtung und insbesondere ein Luftleitelement derselben bei geöffnetem Schiebe-/Hebedach einen größeren Anstellwinkel einnimmt, als bei geschlossenem Schiebe-/Hebedach. Hierdurch lassen sich die aerodynamischen Verhältnisse besonders fein auf mögliche weitere Einflüsse anpassen und dadurch ein bedarfsgerechter Abtrieb erzeugen, welcher die Einflüsse eines geöffneten Schiebe-/Hebedaches berücksichtigt.

Bei einer weiteren vorteilhaften Ausführungsform der erfindungsgemäßen Lösung, weist die Antriebseinrichtung der Luftleiteinrichtung einen zentralen Elektromotor mit zwei koaxialen und flexiblen Antriebswellen auf, die jeweils an ihrem, dem Elektromotor abgewandten Ende mit einer seitlichen Verstellkinematik der Luftleiteinrichtung zusammenwirken. Hierdurch ist zur Verstellung der Luftleiteinrichtung lediglich eine elektrische Antriebseinrichtung erforderlich, welche über die beiden flexiblen Wellen die beiden Verstellkinematiken der Luftleiteinrichtung antreibt. Die flexiblen Antriebswellen ermöglichen es dabei, Montageungenauigkeiten auszugleichen, wodurch die Fertigung vereinfacht wird. Gleichzeitig ist es durch diese Ausgestaltung möglich, lediglich einen einzigen Elektromotor zur Betätigung der Luftleiteinrichtung zu verwenden und nicht zwei, jeweils an der zugehörigen Verstellkinematik angeordnete Elektromotoren einsetzen zu müssen. Hierdurch lassen sich die Teilevielfalt und die Herstellungskosten reduzieren. Denkbar ist auch, dass der im wesentlichen mittig angeordnete Elektromotor der Antriebseinrichtung gekapselt ausgeführt ist und dadurch keine oder nur geringe Schwingungen aufnimmt bzw. an eine Karosserie überträgt. Dies trägt insbesondere zu einer zumindest geräuscharmen Betätigung der Luftleiteinrichtung bei, wodurch eine Komfortsteigerung erzielbar ist.

Bei einer weiteren vorteilhaften Ausführungsform der erfindungsgemäßen Lösung, weist die Verstellkinematik einen Spindeltrieb sowie mehrere miteinander zusammenwirkende Verstellhebel auf. Ein derartiger Spindeltrieb besitzt üblicherweise eine Gewindespindel, gelegentlich auch Bewegungsschraube genannt, die zusammen mit einer Gewindemutter eine rotierende Bewegung in eine translatorische Bewegung übersetzen. Von besonderem Vorteil ist dabei, dass ein derartiger Spindeltrieb selbsthemmend ist, so dass auch bei hohen Geschwindigkeiten, bei welchen üblicherweise hohe Kräfte auf die Luftleiteinrichtung einwirken, die elektrische Antriebseinrichtung abgeschaltet werden kann und die Luftleiteinrichtung bzw. ein Luftleitelement derselben ausschließlich über die selbsthemmende Wirkung des Spindeltriebes in der jeweiligen Stellung gehalten werden kann. Darüber hinaus ist es mit derartigen Spindeltrieben möglich, äußerst präzise Verstellbewegungen darzustellen, so dass die Stellung der Luftleiteinrichtung besonders fein justierbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: ein erfindungsgemäßes Kraftfahrzeug in einer Ansicht,
- Fig. 2: eine Antriebseinrichtung und eine Verstellkinematik einer erfindungsgemäßen Luftleiteinrichtung,

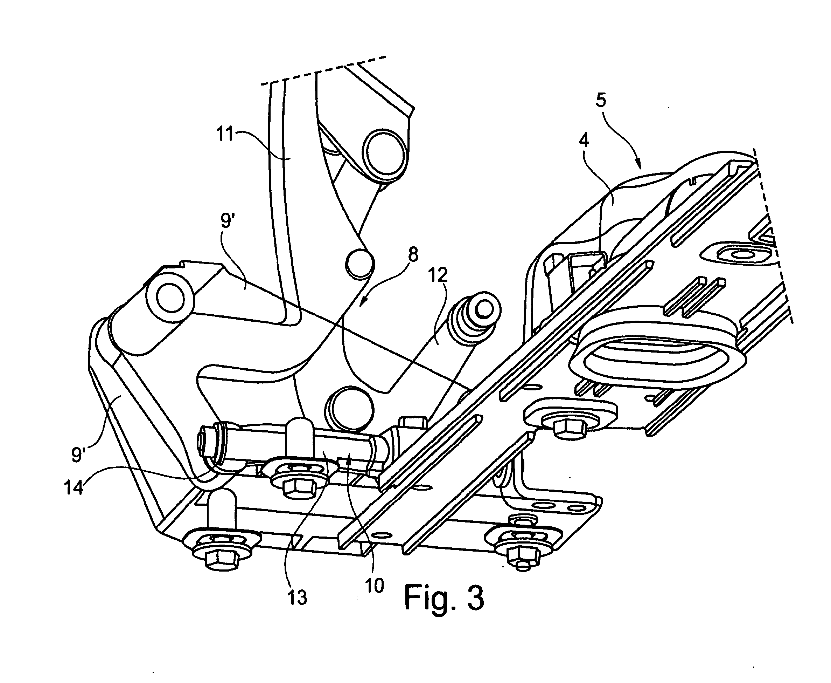

- Fig. 3: eine Detaildarstellung der Verstellkinematik der Luftleiteinrichtung und

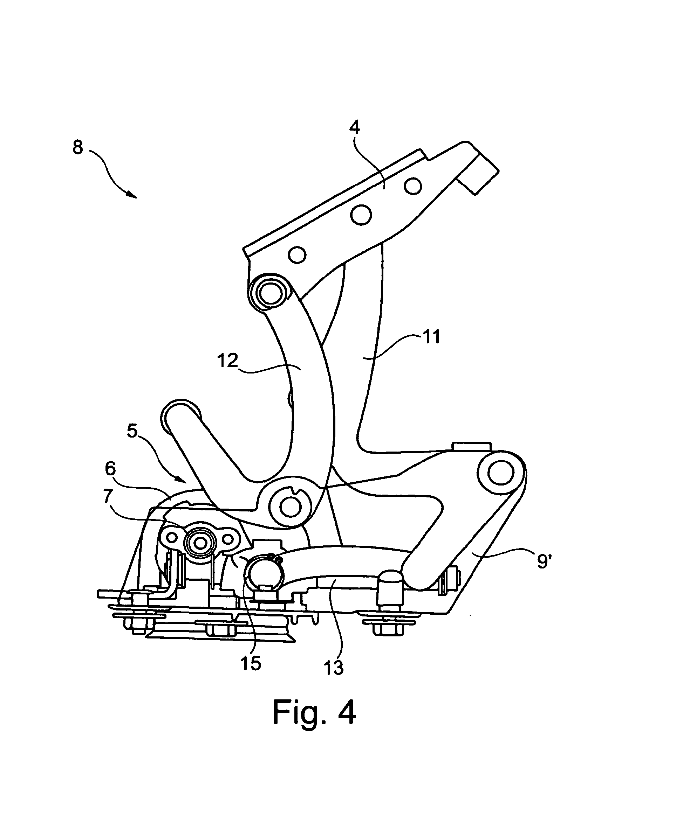

- Fig. 4: eine Darstellung wie in Fig. 3, jedoch aus einer anderen Perspektive.

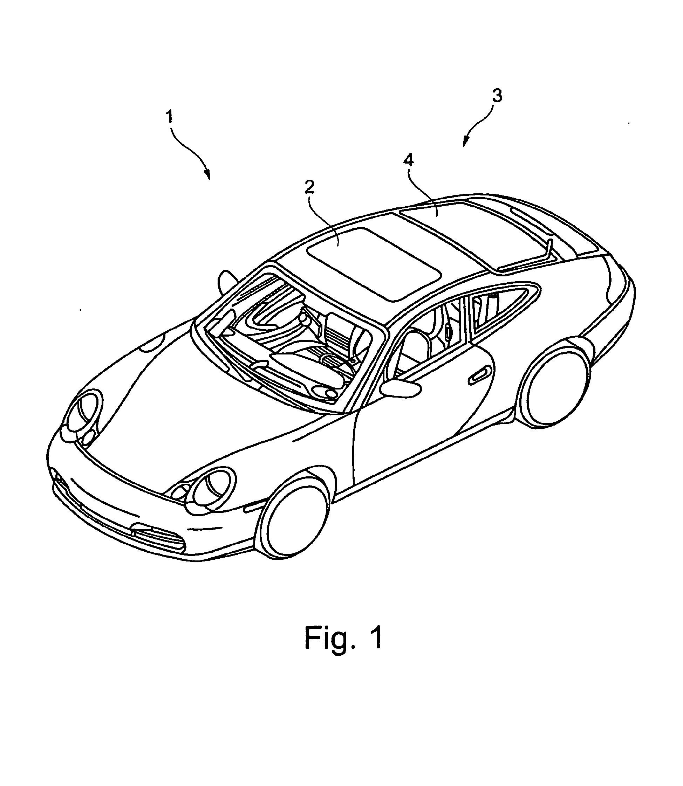

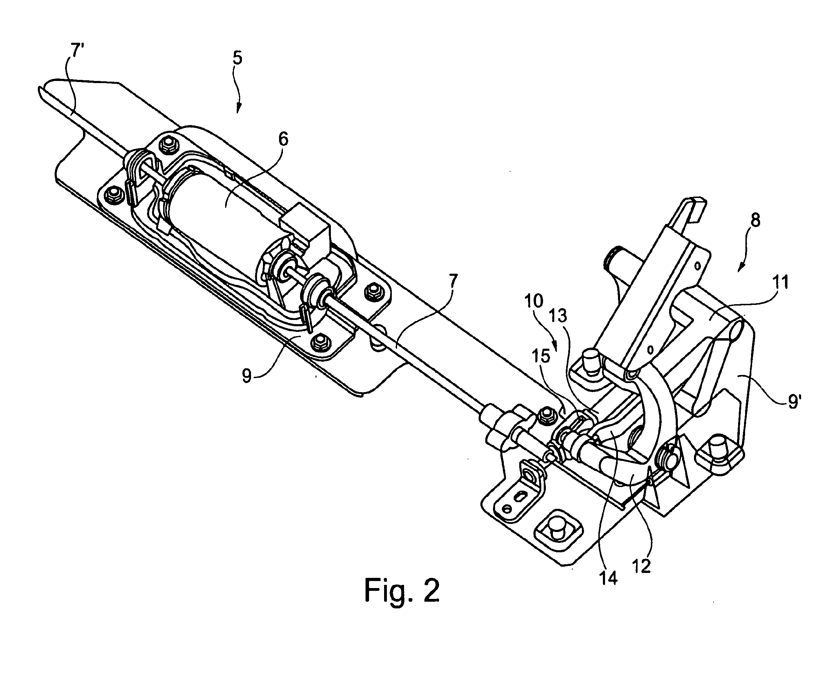

Entsprechend Fig. 1 weist ein erfindungsgemäßes Kraftfahrzeug 1 ein verstellbares, insbesondere ein öffenbares, Schiebe-/Hebedach 2 sowie eine im Heckbereich des Kraftfahrzeuges 1 vorgesehene Luftleiteinrichtung 3 auf. Die Luftleiteinrichtung 3 kann dabei als ausfahrbarer Heckspoiler ausgestaltet sein und ein Luftleitelement 4, beispielsweise eine Spoilerplatte, aufweisen. Die Luftleiteinrichtung 3 beziehungsweise deren Luftleitelement 4 ist dabei zwischen einer maximal ausgefahrenen und einer vollständig eingefahrenen Stellung in zumindest eine weitere Zwischenstellung verstellbar. Gemäß Fig. 1 ist dabei die Ruhestellung der Luftleiteinrichtung 3 gezeichnet, wie sie üblicherweise insbesondere bei einem abgestellten Kraftfahrzeug 1 auftritt. Verstellt wird die Luftleiteinrichtung 3 bzw. deren Luftleitelement 4 mittels einer Antriebseinrichtung 5 (vgl. Fig. 2) welche üblicherweise als Elektromotor ausgebildet ist. Erfindungswesentlich ist nun, dass eine Steuerungseinrichtung vorgesehen ist, die die Luftleiteinrichtung 3 bzw. das dazugehörige Luftleitelement 4 in Abhängigkeit der Stellung des Schiebe-/Hebedaches 2 betätigt. Dies bedeutet, dass bei einem geöffnetem bzw. angestellten Schiebe-/Hebedach 2 die Steuerungseinrichtung ein weiteres Ausfahren der Luftleiteinrichtung 3 bzw. dessen Luftleitelement 4 veranlasst, als bei einem geschlossenen Schiebe-/Hebedach 2. Hierdurch soll insbesondere erreicht werden, dass die bei einem geöffneten Schiebe-/Hebedach 2 abreißende Luftströmung, welche automatisch für einen geringeren Abtrieb am Kraftfahrzeug 1 sorgt, kompensiert werden kann, so dass günstigstenfalls derselbe Abtrieb erzeugt wird, wie dies bei geschlossenem Schiebe-/Hebedach 2 der Fall wäre.

Zur Verstellung der Luftleiteinrichtung 3 bzw. dessen Luftleitelement 4 wird oben genannte Antriebseinrichtung 5 verwendet, welche gemäß der in Fig. 2 dargestellten Ausführungsform einen zentralen Elektromotor 6 mit zwei koaxialen, flexiblen Antriebswellen 7 und 7' aufweist. Die beiden Antriebswellen 7 und 7' verlassen dabei den Elektromotor auf gegenüberliegenden Seiten und sind jeweils an ihrem, dem Elektromotor 6 abgewandten Ende mit einer seitlichen Verstellkinematik 8 der Luftleiteinrichtung 3 verbunden. Der Elektromotor 6 kann dabei gekapselt ausgeführt und insbesondere schwingungsgedämpft auf einem Trägerelement 9 befestigt sein. Die Antriebswellen 7 und 7' des Elektromotors 6 verlaufen im wesentlichen in Fahrzeugquerrichtung, so dass sich die beiden Verstellkinematiken 8 und 8' seitlich befinden. Die ausschließlich gezeichnete Verstellkinematik 8 weist einen Spindeltrieb 10 sowie mehrere miteinander zusammenwirkende Hebel 11 und 12 auf. Eine Gewindespindel 13 des Spindeltriebes 10 verläuft dabei im wesentlichen orthogonal zur Antriebswelle 7.

Generell weist die Verstellkinematik 8 ein Trägerelement 9' sowie die beiden daran drehbar gelagerten Verstellhebel 11 und 12 und den Spindeltrieb 10 auf. Der erste Verstellhebel 11 ist dabei als so genannter Kniehebel ausgebildet und in seinem Knie drehbar am Trägerelement 9' gelagert. An seinen jeweiligen Längsenden ist der erste Verstellhebel 11 einerseits drehbar an dem Luftleitelement 4 und andererseits drehbar an einem Verstellglied 14 angeordnet. Das Verstellglied 14 wirkt dabei als Pendelstütze und ist mit seinem, dem ersten Verstellhebel 11 abgewandten Ende, drehbar an einer Spindelmutter 15 angeordnet, die bei einer Betätigung des Spindeltriebes 10, das heißt bei einem Verdrehen der Gewindespindel 13, translatorisch verstellt wird.

Der zweite Verstellhebel 12 hingegen, ist ebenfalls als Kniehebel ausgebildet und in seinem Kniebereich drehbar am Trägerelement 9' gelagert. Eines seiner beiden Längsenden ist dabei gleich dem ersten Verstellhebel 11 drehbar am Luftleitelement 4 gelagert. Ein Betätigen der Verstellkinematik 8 bewirkt ein Verdrehen des ersten Verstellhebels 11 und über das Luftleitelement 4 auch ein Verdrehen des zweiten Verstellhebels 12. Prinzipiell wird dabei bei einer Betätigung der Verstellkinematik 8 die Luftleiteinrichtung 3, das heißt das Luftleitelement 4 derselben, translatorisch und rotatorisch verstellt. Ferner kann die Luftleiteinrichtung 3, das heißt deren Luftleitelement 4 in eine cw-Wert optimierte Stellung verstellt werden, welche einem Normalmodus entspricht, oder in einen Sportmodus ausgefahren werden, wobei in dem Sportmodus ein steileres Ankippen des Luftleitelementes 4 mit erhöhtem Abtrieb des Kraftfahrzeugs 1 erzielt wird.

Durch die Verstellkinematik 8 mit den einzelnen Verstellhebeln 11 und 12 wird beim Ausfahren des Luftleitelementes 4 aus dessen Ruhestellung eine überlagerte Bewegung erzielt, nämlich oben beschriebene Drehung sowie eine zusätzliche lineare Verschiebung in Richtung des Fahrzeughecks, wodurch insgesamt ein erhöhter Abtrieb erzielbar ist. Generell ist dabei denkbar, dass die Verstellkinematik 8 bzw. die einzelnen Verstellhebel 11 und 12 bzw. das Verstellglied 14 aus Leichtmetall oder aus Kunststoff ausgebildet sind und dadurch ein geringeres Gewicht aufweisen, was insbesondere im Sportwagenbau von großem Vorteil ist.

## Patentansprüche

1. Kraftfahrzeug (1) mit zumindest einer, mittels einer Antriebseinrichtung (5), ausfahrbaren Luftleiteinrichtung (3), die zwischen einer maximal ausgefahrenen und einer vollständig eingefahrenen Stellung in zumindest eine weitere Zwischenstellung verstellbar ist, wobei die Luftleiteinrichtung (3) als Heckspoiler ausgebildet ist, **dadurch gekennzeichnet, dass** das Kraftfahrzeug (1) ein verstellbares Schiebe/Hebedach (2) aufweist, wobei eine Steuerungseinrichtung vorgesehen ist, die so ausgebildet ist, dass sie eine Stellung des Schiebe-/Hebedaches (2) erfasst und damit eine mögliche Beeinflussung der aerodynamischen Verhältnisse durch das Schiebe-/Hebedach (2) und dass sie ein Luftleitelement (4) des Heckspoilers in Abhängigkeit der Stellung des Schiebe-/Hebedaches (2) betätigt, wobei der Heckspoiler weiter ausgefahren wird, wenn das Schiebe-/Hebedach (2) geöffnet ist, als dies der Fall ist, wenn das Schiebe-/Hebedach (2) geschlossen ist.

2. Kraftfahrzeug nach Anspruch 1, **dadurch gekennzeichnet, dass** die Antriebseinrichtung (5) der Luftleiteinrichtung (3) einen zentralen Elektromotor (6) mit zwei koaxialen, flexiblen Antriebswellen (7,7') aufweist, die jeweils an ihrem, dem Elektromotor (6) abgewandten Ende mit einer seitlichen Verstellkinematik (8) der Luftleiteinrichtung (3) zusammenwirken.

3. Kraftfahrzeug nach Anspruch 1 oder 2, **dadurch gekennzeichnet, dass** die Verstellkinematik (8) einen Spindeltrieb (10) aufweist.

4. Kraftfahrzeug nach Anspruch 3, **dadurch gekennzeichnet, dass** die Antriebswellen (7,7') des Elektromotors (6) im wesentlichen in Fahrzeugquerrichtung und orthogonal zu einer Gewindespindel (13) des Spindeltriebs (8) angeordnet sind.

5. Kraftfahrzeug nach Anspruch 3 oder 4, **dadurch gekennzeichnet, dass** die Verstellkinematik (8) das Luftleitelement (4) der Luftleiteinrichtung (3) translatorisch und rotatorisch verstellt.

6. Kraftfahrzeug nach einem der Ansprüche 1 bis 5, **dadurch gekennzeichnet, dass** die Luftleiteinrichtung (3) in einen Normalmodus und einen Sportmodus überführbar ist, wobei der Normalmodus einer cw-Wert optimierten Stellung der Luftleiteinrichtung (3) entspricht und gar keinen oder einen geringeren Abtrieb des Kraftfahrzeuges (1) erzeugt als im Sportmodus.

7. Kraftfahrzeug nach einem der Ansprüche 2 bis 6, **dadurch gekennzeichnet, dass** die Verstellkinematik (8) ein Trägerelement (9') sowie zwei daran drehbar gelagerte Verstellhebel (11,12) aufweist, die beide ebenfalls drehbar an einem Luftleitelement (4) der Luftleiteinrichtung (3) angebunden sind.

8. Kraftfahrzeug nach Anspruch 7, **dadurch gekennzeichnet, dass** ein erster der beiden Verstellhebel (11) drehbar an einem Verstellglied (14) angebunden ist, das an seinem abgewandtem Ende drehbar an einer Spindelmutter (15) angeordnet ist, die bei einer Betätigung des Spindeltriebs (10) translatorisch verstellt wird.

9. Kraftfahrzeug nach einem der Ansprüche 1 bis 8, **dadurch gekennzeichnet, dass** ein Betätigen der Verstellkinematik (8) ein Verdrehen des ersten Verstellhebels (11) und über das Luftleitelement (4) auch ein Verdrehen des zweiten Verstellhebels (12) bewirkt.

## Claims

1. Motor vehicle (1) with at least one air-guiding device (3) which can be extended by means of a driving device (5) and can be adjusted into at least one further intermediate position between a position in which it is extended to the maximum and a fully retracted position, wherein the air-guiding device (3) is designed as a rear spoiler, **characterized in that** the motor vehicle (1) has an adjustable tilt-and-slide roof (2), wherein a control device is provided, said control device being designed so as to detect a position of the tilt-and-slide roof (2) and therefore a possible influencing of the aerodynamic conditions by the tilt-and-slide roof (2), and so as to actuate an air-guiding element (4) of the rear spoiler depending on the position of the tilt-and-slide roof (2), wherein the rear spoiler is extended further when the tilt-and-slide roof (2) is open than is the case when the tilt-and-slide roof (2) is closed.

2. Motor vehicle according to Claim 1, **characterized in that** the driving device (5) of the air-guiding device (3) has a central electric motor (6) with two coaxial, flexible drive shafts (7, 7') which in each case interact at the end thereof facing away from the electric motor (6) with a lateral adjusting kinematic arrangement (8) of the air-guiding device (3).

3. Motor vehicle according to Claim 1 or 2, **characterized in that** the adjusting kinematic arrangement (8) has a spindle drive (10).

4. Motor vehicle according to Claim 3, **characterized in that** the drive shafts (7, 7') of the electric motor (6) are arranged substantially in the transverse direction of the vehicle and orthogonally to a threaded spindle (13) of the spindle drive (8).

5. Motor vehicle according to Claim 3 or 4, **characterized in that** the adjusting kinematic arrangement (8) adjusts the air-guiding element (4) of the air-guiding device (3) in a translational and rotational manner.

6. Motor vehicle according to one of Claims 1 to 5, **characterized in that** the air-guiding device (3) can be transferred into a normal mode and a sports mode, wherein the normal mode corresponds to a position of the air-guiding device (3) that is optimized in terms of coefficient of drag and produces a smaller downforce of the motor vehicle (1) than in the sports mode, if any downforce at all.

7. Motor vehicle according to one of Claims 2 to 6, **characterized in that** the adjusting kinematic arrangement (8) has a support element (9') and two adjusting levers (11, 12) which are mounted rotatably thereon and are both connected likewise rotatably to an air-guiding element (4) of the air-guiding device (3).

8. Motor vehicle according to Claim 7, **characterized in that** a first of the two adjusting levers (11) is connected rotatably to an adjusting member (14) which, at the remote end thereof, is arranged rotatably on a spindle nut (15) which is adjusted in a translational manner upon actuation of the spindle drive (10).

9. Motor vehicle according to one of Claims 1 to 8, **characterized in that** an actuation of the adjusting kinematic arrangement (8) causes rotation of the first adjusting lever (11) and, via the air-guiding element (4), also causes rotation of the second adjusting lever (12).

## Revendications

1. Véhicule automobile (1) avec au moins un dispositif aérodynamique (3) rétractable au moyen d'un dispositif d'entraînement (5), qui est déplaçable dans au moins une autre position intermédiaire entre une position étendue au maximum et une position complètement rentrée, dans lequel le dispositif aérodynamique (3) est conçu comme becquet arrière, **caractérisé en ce que** le véhicule automobile (1) comporte un toit coulissant-ouvrant réglable (2), dans lequel il est prévu un dispositif de commande, qui est conçu de telle manière qu'il détecte une position du toit coulissant-ouvrant (2) et ainsi une influence des conditions aérodynamiques par le toit coulissant-ouvrant (2) et qu'il actionne un élément aérodynamique (4) du becquet arrière en fonction de la position du toit coulissant-ouvrant (2), dans lequel le becquet arrière est davantage étendu lorsque le toit coulissant-ouvrant (2) est ouvert, que lorsque le toit coulissant-ouvrant (2) est fermé.

2. Véhicule automobile selon la revendication 1, **caractérisé en ce que** le dispositif d'entraînement (5) du dispositif aérodynamique (3) comporte un moteur électrique central (6) avec deux arbres d'entraînement flexibles coaxiaux (7, 7') qui coopèrent respectivement par leur extrémité située à l'opposé du moteur électrique (6) avec un mécanisme de réglage (8) latéral du dispositif aérodynamique (3).

3. Véhicule automobile selon la revendication 1 ou 2, **caractérisé en ce que** le mécanisme de réglage (8) comporte un entraînement à broche (10).

4. Véhicule automobile selon la revendication 3, **caractérisé en ce que** les arbres d'entraînement (7, 7') du moteur électrique (6) sont disposés essentiellement dans la direction transversale du véhicule et en direction orthogonale par rapport à une broche filetée (13) de l'entraînement à broche (8).

5. Véhicule automobile selon la revendication 3 ou 4, **caractérisé en ce que** le mécanisme de réglage (8) déplace en translation et en rotation l'élément aérodynamique (4) du dispositif aérodynamique (3).

6. Véhicule automobile selon l'une quelconque des revendications 1 à 5, **caractérisé en ce que** le dispositif aérodynamique (3) peut être placé dans un mode normal et dans un mode sport, dans lequel le mode normal correspond à une position du dispositif aérodynamique (3) présentant un coefficient cw optimisé et produit même une dérive nulle ou plus faible du véhicule automobile (1) que dans le mode sport.

7. Véhicule automobile selon l'une quelconque des revendications 2 à 6, **caractérisé en ce que** le mécanisme de réglage (8) comporte un élément de support (9') ainsi que deux leviers de réglage (11, 12) montés de façon rotative sur celui-ci, qui sont également reliés tous les deux de façon rotative à un élément aérodynamique (4) du dispositif aérodynamique (3).

8. Véhicule automobile selon la revendication 7, **caractérisé en ce qu'**un premier des deux leviers de réglage (11) est relié de façon rotative à un organe de réglage (14), qui est disposé de façon rotative, à son extrémité opposée, sur un écrou de broche (15), qui est déplacé en translation lors d'un actionnement de l'entraînement à broche (10).

9. Véhicule automobile selon l'une quelconque des revendications 1 à 8, **caractérisé en ce qu'**un actionnement du mécanisme de réglage (8) provoque une rotation du premier levier de réglage (11) et, par l'intermédiaire de l'élément aérodynamique (4), également une rotation du deuxième levier de réglage (12).
